# DEMANDE DE BREVET EUROPEEN

(11) **EP 1 672 863 A1**
(43) Date de publication de la demande: **21.06.2006**
(21) Numéro de dépôt: 05300992.4
(22) Date de dépôt: 02.12.2005
(51) Int. Cl.: H04L 29/02, H04L 12/56

(54) **Dispositif de contrôle d'interruption de fonctionnement pour un routeur d'un réseau de communication**

(30) Priorité: 20.12.2004 FR 0453063
(71) Demandeur: ALCATEL, 75008 Paris (FR)
(72) Inventeur: Levy, Thomas, 75013, PARIS (FR); Marce, Olivier, 91300, MASSY (FR)
(74) Mandataire: Vigand, Régis Louis Michel

(57) **Abrégé**

Un dispositif (D) est dédié au contrôle de l'interruption de fonctionnement d'un routeur (R) d'un réseau de communication à protocole Internet (IP). Ce dispositif (D) comprend des moyens d'observation (MO) chargés, lorsqu'ils en reçoivent l'ordre, d'observer les datagrammes IP reçus par le routeur (R) et en transit, et de délivrer un signal d'alerte en cas d'absence de détection de datagramme IP pendant une première durée choisie. Il comprend en outre des moyens de contrôle (MC) chargés, lorsque le fonctionnement du routeur (R) doit être interrompu, i) d'ordonner à des moyens de traitement (MT) de générer des messages d'avertissement sortants destinés à d'autres routeurs et signalant le retrait des routes permettant l'acheminement de datagrammes IP par ledit routeur (R), ii) d'ordonner aux moyens d'observation (MO) de commencer une observation, et iii) d'autoriser l'interruption de fonctionnement du routeur (R) en cas de réception d'un signal d'alerte en provenance des moyens d'observation (MO).

## Description

L'invention concerne les routeurs intra ou inter domaines des réseaux de communication à protocole Internet (ou IP), et plus précisément le contrôle de l'interruption de fonctionnement de tels routeurs.

On entend ici par « réseau IP » un contexte multidomaines constitué d'une somme de domaines IP (ou systèmes autonomes (AS)) raccordés les uns aux autres au moyen d'équipements d'accès formant des noeuds, tels que des routeurs inter-domaines.

Par ailleurs, on entend ici par « routeur intra ou inter domaines » un routeur utilisant un protocole de routage, comme par exemple le protocole BGP (pour « Border Gateway Protocol »), pour échanger des informations de routage avec d'autres routeurs appartenant soit au même domaine IP (ou système autonome (AS)) que le sien, soit à un autre domaine IP que le sien. Ces informations de routage sont destinées à renseigner chaque routeur sur les routes qui permettent à chacun des routeurs avec lesquels il est « en contact » d'acheminer des paquets de données (ou datagrammes) IP vers un noeud voisin.

Comme le sait l'homme de l'art, afin de disposer d'une certaine souplesse d'utilisation, un opérateur utilise fréquemment plusieurs liens (au moins deux) entre des routeurs de son domaine IP et des routeurs de domaines IP extérieurs. Pour ce faire, il utilise des routeurs de façon redondante.

Cette redondance est particulièrement utile lorsque survient une panne au niveau d'un routeur. Cependant, lorsqu'une opération de maintenance planifiée doit être effectuée au niveau d'un routeur impliqué dans une redondance, par exemple pour le remplacer par un nouveau routeur ou pour le faire évoluer, son fonctionnement doit être interrompu momentanément ou définitivement. Or, l'interruption d'un routeur provoque non seulement le retrait de toutes ses routes d'acheminement de datagrammes IP, lesquelles sont utilisées par le réseau pour définir les routes des autres routeurs, mais également l'arrêt immédiat de la transmission des datagrammes IP en transit provenant de ces autres routeurs.

Après l'interruption de fonctionnement d'un routeur, l'information de non disponibilité des routes doit être propagée dans le réseau afin que les routes des autres routeurs soient recalculées, ce qui prend un certain temps compte tenu du temps nécessaire à la convergence du routage de type BGP. Par ailleurs, une fois les nouvelles routes recalculées, il faut les établir en reconfigurant les moteurs de retransmission (« ou « forwarding engine ») des routeurs en état de fonctionnement, ce qui prend encore un certain temps. Or, pendant le temps de calcul des routes et/ou pendant le temps de reconfiguration, des datagrammes IP, transmis sur les anciennes routes passant par le routeur dont le fonctionnement a été interrompu, peuvent continuer d'arriver au niveau du routeur interrompu et donc être perdus.

Afin de remédier à cet inconvénient, il a été récemment proposé un mécanisme de retardement de l'interruption de fonctionnement d'un routeur de type BGP-4. Un tel mécanisme est décrit dans le document « Graceful Shutdown of BGP Sessions », june 2004, accessible à l'adresse Internet www.ietf.org/internet-drafts/draft-dubois-bgp-planned-maintenance-00.txt sur le site internet de l'IETF (« International Engineering Task Force »).

Plus précisément, ce mécanisme connu consiste, une fois que l'interruption de fonctionnement d'un routeur a été décidée, à générer au niveau du routeur des messages d'avertissement sortants destinés à d'autres routeurs et signalant le retrait des routes qui lui permettent d'acheminer des datagrammes IP, puis à déclencher une temporisation d'une durée prédéterminée de manière à interrompre le fonctionnement du routeur lorsque la durée prédéterminée est écoulée.

Grâce à ce mécanisme connu, le routeur continue à retransmettre les datagrammes IP qu'il reçoit des autres routeurs du réseau pendant toute la durée de la temporisation. Cependant, le délai étant prédéterminé, typiquement égal à 300 secondes, il peut s'avérer trop long ou trop court selon les circonstances. Par conséquent, le routeur concerné peut soit continuer à fonctionner alors même qu'il ne reçoit déjà plus de datagrammes IP à retransmettre (du fait que les nouvelles routes ont été recalculées et reconfigurées), soit arrêter de fonctionner alors même qu'il reçoit encore des datagrammes IP à retransmettre (du fait que les nouvelles routes n'ont pas encore été recalculées et/ou reconfigurées).

L'invention a pour but d'améliorer la situation.

Elle propose à cet effet un dispositif de contrôle de l'interruption de fonctionnement d'un routeur (intra ou inter domaines) d'un réseau IP, comprenant :
- des moyens d'observation chargés, lorsqu'ils en reçoivent l'ordre, d'observer les datagrammes IP (ou paquets de données) qui sont reçus par le routeur et qui sont en transit, et de délivrer un signal d'alerte en cas d'absence de détection de datagramme IP pendant une première durée choisie, et
- des moyens de contrôle chargés, lorsque l'on doit interrompre le fonctionnement du routeur,
   ➢ d'ordonner à des moyens de traitement de générer des messages d'avertissement sortants destinés à d'autres routeurs et signalant le retrait des routes permettant l'acheminement de datagrammes IP par le routeur,
   ➢ d'ordonner aux moyens d'observation de commencer une observation, et
   ➢ d'autoriser l'interruption de fonctionnement du routeur lorsqu'ils reçoivent un signal d'alerte provenant des moyens d'observation.

Le dispositif de contrôle selon l'invention peut comporter d'autres caractéristiques qui peuvent être prises séparément ou en combinaison, et notamment :
- ses moyens d'observation peuvent être chargés d'observer les datagrammes IP reçus au plus pendant une seconde durée choisie, et d'émettre un signal d'alerte à destination des moyens de contrôle lorsque la durée d'observation devient égale à cette seconde durée choisie ;
- la seconde durée peut être choisie dans un intervalle compris entre environ 1 minute et environ 10 minutes, et de préférence entre environ 4 minutes et environ 6 minutes, notamment lorsque le routeur est de type inter-domaines ;
- la première durée peut être choisie dans un intervalle compris entre environ 0,1 seconde et environ 3 secondes, et de préférence entre environ 0,5 seconde et environ 1,5 seconde notamment lorsque le routeur est de type inter-domaines ;
- lorsque le routeur comprend des moyens de stockage des données représentatives des routes d'acheminement de datagrammes IP, les moyens de contrôle peuvent être chargés d'ordonner la suppression des données stockées, représentatives des routes d'acheminement de datagrammes IP du routeur, une fois qu'ils ont autorisé son interruption de fonctionnement ;
- il peut comprendre les moyens de traitement.

L'invention propose également un routeur (intra ou inter domaines), pour un réseau IP, équipé d'un dispositif de contrôle du type de celui présenté ci-avant.

Un tel routeur peut comprendre des moyens de stockage agencés sous la forme d'une base d'informations de routage (ou RIB pour « Routing Information Base ») et/ou d'une base d'informations de transmission (ou FIB pour « Forwarding Information Base »), dédiée(s) aux routes d'acheminement de datagrammes IP.

Par ailleurs, lorsque le dispositif de contrôle ne comprend pas les moyens de traitement, ces derniers sont implantés dans le routeur et sont chargés de générer des messages sortants destinés à d'autres routeurs et comprenant soit des données d'information représentatives de routes pour l'acheminement de datagrammes IP, soit le signalement du retrait de ses routes d'acheminement de datagrammes IP.

L'invention est particulièrement bien adaptée, bien que de façon non exclusive, aux routeurs inter-domaines de type BGP.

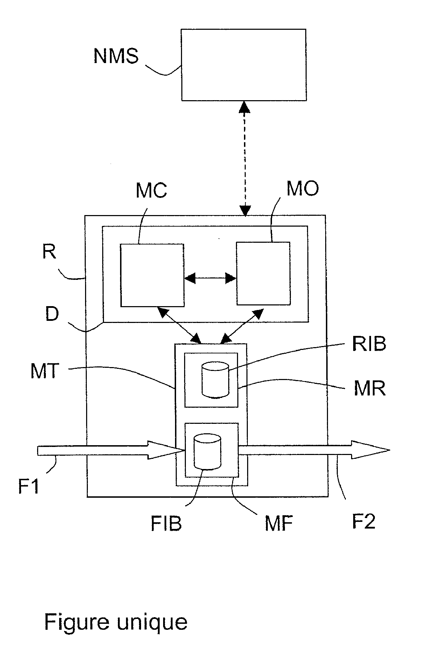

D'autres caractéristiques et avantages de l'invention apparaîtront à l'examen de la description détaillée ci-après, et du dessin annexé, sur lequel l'unique figure illustre de façon très schématique un routeur inter-domaines équipé d'un exemple de réalisation d'un dispositif de contrôle selon l'invention. Le dessin annexé pourra non seulement servir à compléter l'invention, mais aussi contribuer à sa définition, le cas échéant.

L'invention a pour objet de permettre le contrôle de l'interruption de fonctionnement d'un routeur intra ou inter domaines d'un réseau de communication à protocole Internet (ou IP), afin d'en limiter les conséquences notamment en terme de perte de datagrammes IP (ou paquets de données).

Dans la description qui suit on considère, à titre d'exemple illustratif, que le routeur est de type inter-domaines. Mais, l'invention n'est pas limitée à ce type de routeur. Elle concerne également les routeurs intra-domaine.

Par ailleurs, on considère dans ce qui suit que le routeur inter-domaines est de type BGP (pour « Border Gateway Protocol »). Comme indiqué dans la partie introductive, on entend ici par « routeur BGP » un routeur utilisant un protocole de routage de type BGP afin d'échanger des informations de routage avec un autre routeur BGP, appartenant soit au même domaine IP (ou système autonome (AS)) que le sien, soit à un autre domaine IP que le sien.

Un routeur (BGP) R comprend tout d'abord, comme cela est illustré schématiquement et de façon fonctionnelle sur l'unique figure, un module de traitement MT comportant un module de routage MR et au moins un module de transmission (ou « forwarding ») MF couplé à ses interfaces (non représentées).

Le module de routage MR comprend des moyens de stockage RIB, généralement appelés base d'informations de routage RIB (ou « Routing Information Base ») et dans lesquels sont stockées des données (ou informations) de routage permettant de router des datagrammes IP (ou paquets de données) vers un routeur suivant. Il est chargé de collecter des informations de routage contenues dans des messages BGP entrants (matérialisés par la flèche F1), reçus par les interfaces d'entrée du routeur R, provenant des routeurs BGP auxquels son routeur R est raccordé et comportant des données d'information représentatives de routes pour l'acheminement de datagrammes IP, afin d'alimenter la base d'informations de routage RIB.

La base d'informations de routage RIB comporte généralement un très grand nombre d'entrées permettant chacune de stocker une information de routage relative à une adresse IP (ou un préfixe) de routeur connu(e). Parmi ces informations, certaines sont notamment relatives à la (re)transmission de datagrammes IP (en transit).

Le module de routage MR est également chargé de générer, en fonction des données de routage stockées dans la base d'informations de routage RIB, des messages BGP sortants (matérialisés par la flèche F2) comprenant également des données d'information représentatives de routes pour l'acheminement de datagrammes IP et destinés à être transmis par le module de transmission MF et via les interfaces de sortie aux routeurs BGP raccordés à son routeur R.

Le module de transmission MF est couplé aux interfaces du routeur R, afin, d'une part, de recevoir les flux provenant des autres routeurs et notamment les messages BGP entrants (flèche F1) destinés au module de routage MR, et d'autre part, de (re-)transmettre des flux et notamment les messages BGP sortants fournis par le module de routage MR (flèche F2) et destinés aux autres routeurs.

Le module de transmission MF comprend des moyens de stockage FIB, généralement appelés base d'informations de transmission FIB (ou « Forwarding Information Base ») et dans lesquels sont stockées des données (ou informations) de routage lui permettant de router des datagrammes IP (ou paquets de données) vers un routeur suivant.

La base d'informations de transmission FIB comporte essentiellement des informations de (re)transmission extraites de la base d'informations de routage RIB. Cette base d'informations de transmission FIB comporte des entrées stockant chacune une information de transmission relative à une adresse (ou un préfixe) de routeur connu(e).

Les données (ou informations) de routage, stockées dans les moyens de stockage RIB et FIB, constituent ce que l'on appelle habituellement une table de routage.

Le module de transmission MF comprend également une matrice de commutation (non représentée) qui peut être configurée en fonction d'instructions fournies par le réseau (généralement par son système de gestion de réseau ou NMS (pour « Network Management System »)), d'informations d'adresse contenues dans les datagrammes IP à (re- )transmettre, et d'informations de routage contenues dans une base d'informations de transmission FIB. Cette matrice de commutation est généralement couplée à des mémoires permettant l'insertion locale et/ou l'extraction locale de datagrammes IP, ainsi que le stockage temporaire de datagrammes IP reçus sur l'une des interfaces.

Grâce aux messages BGP entrants et sortants, les données d'information qui définissent les routes du réseau peuvent se propager d'un routeur BGP à un autre routeur BGP. Cela permet d'alimenter leurs tables de routage en données de routage actualisées et de configurer leur matrice de commutation.

Selon l'invention, au moins certains des routeurs R sont équipés d'un dispositif de contrôle D chargé de contrôler leur interruption de fonctionnement lorsque l'opérateur du réseau le requiert, par exemple via son NMS.

Comme cela est schématiquement et fonctionnellement illustré sur l'unique figure, le dispositif de contrôle D comprend au moins un module d'observation MO et un module de contrôle MC.

Il est important de noter que le dispositif de contrôle D pourrait également comprendre le module de traitement MT décrit ci-avant.

Le module d'observation MO est chargé, chaque fois qu'il en reçoit l'ordre du module de contrôle MC, d'observer les datagrammes IP qui sont reçus par les interfaces du routeur R et qui sont en transit. S'il n'observe pas de datagramme IP pendant une première durée choisie, alors il délivre un signal d'alerte à destination du module de contrôle MC.

Pour ce faire, dès que le module d'observation MO commence à détecter que le routeur ne reçoit pas de datagramme IP, il déclenche une temporisation de durée maximale égale à la première durée. Si le routeur R ne reçoit aucun datagramme IP pendant toute la durée de la temporisation alors le module d'observation MO délivre son signal d'alerte. Dans le cas contraire, le module d'observation MO interrompt la temporisation et attend que le routeur R ne reçoive de nouveau plus de datagramme IP pour re-déclencher la temporisation.

La première durée est par exemple comprise entre environ 0,1 seconde et environ 3 secondes, et de préférence entre environ 0,5 seconde et environ 1,5 seconde. Par exemple, elle peut être égale à 1 seconde. Cette première durée est préférentiellement configurable par l'opérateur. Ces valeurs sont plus particulièrement adaptées aux routeurs de type inter-domaines. Dans le cas de routeurs de type intra-domaine d'autres valeurs doivent être choisies.

Afin d'éviter que la phase d'observation ne dure trop longtemps, le module d'observation MO peut être configuré de manière à ne pouvoir observer les datagrammes IP reçus que pendant une seconde durée choisie.

Pour ce faire, dès que le module d'observation MO reçoit un ordre d'observation, il déclenche une autre temporisation de durée maximale égale à la seconde durée. Si le routeur R reçoit des datagrammes IP pendant toute la durée de cette autre temporisation alors le module d'observation MO délivre son signal d'alerte. Dans le cas contraire, c'est la temporisation de la première durée qui prévaut (il est en effet rappelé que si le routeur R ne reçoit aucun datagramme IP pendant toute la première durée de temporisation alors le module d'observation MO délivre un signal d'alerte).

La seconde durée est par exemple comprise entre environ 1 minute et environ 10 minutes, et de préférence entre environ 4 minutes et environ 6 minutes. Par exemple, elle peut être égale à 5 minutes. Cette seconde durée est préférentiellement configurable par l'opérateur. Ces valeurs sont plus particulièrement adaptées aux routeurs de type inter-domaines. Dans le cas de routeurs de type intra-domaine d'autres valeurs doivent être choisies.

Le module de contrôle MC est chargé, chaque fois qu'il reçoit de l'opérateur du réseau, par exemple via le NMS, une demande d'interruption du fonctionnement du routeur R, d'une part, d'ordonner au module de traitement MT de générer des messages d'avertissement BGP sortants destinés à d'autres routeurs et signalant le retrait de toutes les routes qui permettent l'acheminement de datagrammes IP par le routeur R, et d'autre part, d'ordonner au module d'observation MO de commencer une observation, selon la procédure décrite ci-avant.

Les messages d'avertissement BGP sont tout à fait classiques. Il s'agit de ce que l'homme de l'art appelle des messages de mise à jour (ou « update message ») dont le champ dédié au retrait de routes (ou « withdrawn route field ») n'est pas vide. En fait, ce champ comprend les désignations des routes à retirer.

Lorsque les routeurs BGP du réseau, qui participent à une session BGP avec le retour R dont l'interruption est demandée, reçoivent un message d'avertissement BGP, ils mettent à jour leurs tables de routage respectives (stockées dans leurs moyens de stockage RIB et FIB). Le réseau peut alors recalculer de nouvelles routes qui ne passent pas par le routeur R dont l'interruption est demandée, puis procéder à la reconfiguration des routeurs impliqués dans ces nouvelles routes.

Il est important de noter que le module de contrôle MC n'autorise pas la suppression des données d'information représentatives des routes d'acheminement de datagrammes IP de son routeur R, lesquelles sont stockées dans les moyens de stockage RIB et FIB, alors même qu'il a ordonné la transmission de messages d'avertissement signalant le retrait desdites routes. Comme on le verra plus loin, cette suppression de données d'information peut être éventuellement autorisée une fois que le fonctionnement du routeur R a été interrompu.

Une fois que le module de contrôle MC a transmis ses ordres au module de traitement MT et au module d'observation MO, il attend que le module d'observation MO lui adresse un signal d'alerte.

Une fois que le module de contrôle MC a reçu le signal d'alerte du module d'observation MO, il peut autoriser l'interruption de fonctionnement du routeur R.

L'instant de réception de ce signal d'alerte varie en fonction de la durée pendant laquelle le routeur continu à recevoir des datagrammes IP des autres routeurs avec lesquels il a établi une ou des sessions IP. En fait, le module d'observation MO attend le signal d'alerte pendant au moins la première durée et au plus la seconde durée. Le temps d'attente dépend ainsi de la topologie en cours du réseau et du trafic en cours, et non pas d'un choix arbitraire. Par conséquent, le fonctionnement du routeur R est interrompu dès qu'il ne reçoit plus de datagramme IP pendant une première durée, ou au pire une fois que la seconde durée est écoulée.

Préférentiellement, une fois que le module de contrôle MC a autorisé l'interruption de fonctionnement du routeur R, il adresse aux moyens de stockage RIB et FIB un ordre leur demandant de supprimer les données d'information qui représentent les routes d'acheminement de datagrammes IP du routeur R. La table de routage du routeur R est ainsi remise à zéro, si bien qu'elle pourra être reconstituée grâce à de nouvelles sessions BGP une fois le routeur R prêt à fonctionner de nouveau.

Le dispositif de contrôle D selon l'invention, et notamment son module de contrôle MC et son module d'observation MO, ainsi que son éventuel module de traitement MT, peuvent être réalisés sous la forme de circuits électroniques, de modules logiciels (ou informatiques), ou d'une combinaison de circuits et de logiciels.

L'invention ne se limite pas aux modes de réalisation de dispositif de contrôle et de routeur décrits ci-avant, seulement à titre d'exemple, mais elle englobe toutes les variantes que pourra envisager l'homme de l'art dans le cadre des revendications ci-après.

## Revendications

1. Dispositif (D) de contrôle de l'interruption de fonctionnement d'un routeur (R) d'un réseau de communication à protocole Internet (IP), **caractérisé en ce qu'**il comprend des moyens d'observation (MO) agencés, en cas de réception d'un ordre, pour observer les datagrammes IP reçus par ledit routeur (R) et en transit et pour délivrer un signal d'alerte en cas d'absence de détection de datagramme IP pendant une première durée choisie, et des moyens de contrôle (MC) agencés, en cas de besoin d'interruption de fonctionnement dudit routeur, i) pour ordonner à des moyens de traitement (MT) de générer des messages d'avertissement sortants destinés à d'autres routeurs et signalant le retrait de routes permettant l'acheminement de datagrammes IP par ledit routeur (R), ii) pour ordonner auxdits moyens d'observation (MO) de commencer une observation, et iii) pour autoriser ladite interruption de fonctionnement dudit routeur (R) en cas de réception d'un signal d'alerte en provenance desdits moyens d'observation (MO).

2. Dispositif selon la revendication 1, **caractérisé en ce que** lesdits moyens d'observation (MO) sont agencés pour observer lesdits datagrammes IP reçus au plus pendant une seconde durée choisie, et pour émettre un signal d'alerte à destination desdits moyens de contrôle (MC) lorsque ladite durée d'observation devient égale à ladite seconde durée choisie.

3. Dispositif selon la revendication 2, **caractérisé en ce que** ladite seconde durée est choisie dans un intervalle compris entre environ 1 minute et environ 10 minutes.

4. Dispositif selon l'une des revendications 1 à 3, **caractérisé en ce que** ladite première durée est choisie dans un intervalle compris entre environ 0,1 seconde et environ 3 secondes.

5. Dispositif selon l'une des revendications 1 à 4, **caractérisé en ce qu'**en présence de moyens de stockage (RIB, FIB) propres à stocker des données représentatives des routes d'acheminement de datagrammes IP, lesdits moyens de contrôle (MC) sont agencés pour ordonner la suppression des données stockées, représentatives des routes d'acheminement de datagrammes IP dudit routeur (R), lorsqu'ils ont autorisé ladite interruption de fonctionnement dudit routeur (R).

6. Dispositif selon l'une des revendications 1 à 5, **caractérisé en ce qu'**il comprend lesdits moyens de traitement (MT).

7. Routeur inter-domaines (R), pour un réseau de communication à protocole Internet (IP), **caractérisé en ce qu'**il comprend un dispositif de contrôle (D) selon l'une des revendications précédentes.

8. Routeur selon la revendication 7, **caractérisé en ce qu'**il comprend des moyens de stockage (RIB, FIB) agencés sous la forme d'une base d'informations de routage (RIB) et/ou d'une base d'informations de transmission (FIB), dédiée(s) aux routes d'acheminement de datagrammes IP.

9. Routeur selon l'une des revendications 7 et 8, **caractérisé en ce qu'**il comprend des moyens de traitement (MT) agencés pour générer des messages sortants destinés à d'autres routeurs et comprenant des données d'information représentatives de routes pour l'acheminement de datagrammes IP, ainsi que des messages d'avertissement sortants destinés auxdits autres routeurs et signalant le retrait des routes d'acheminement de datagrammes IP dudit routeur (R).

10. Routeur selon l'une des revendications 7 à 9, **caractérisé en ce qu'**il est de type BGP.
